# EUROPEAN PATENT APPLICATION

(11) **EP 2 117 089 A1**
(43) Date of publication of application: **11.11.2009**
(21) Application number: 08425309.5
(22) Date of filing: 05.05.2008
(51) Int. Cl.: H01R 43/28

(54) **Device and process for folding over braids of coaxial cables**

(71) Applicant: Curti Costruzioni Meccaniche S.p.A., 48014 Castel Bolognese (RA) (IT)
(72) Inventor: Boccato, Enrico, 40044 Sasso Marconi (BO) (IT)
(74) Representative: Gislon, Gabriele

(57) **Abstract**

The folding of a metal braid (4) of a coaxial cable (2) for the subsequent application of a connector is carried out by means of at least one rotatable brush (1), holding the cable still, supporting its end, and moving said brush or brushes along the circumference of said cable to fold the braid (4).

## Description

The present invention relates to a device and a procedure for folding, or rolling back, the braid of metallic wires that forms the outer conductor of coaxial cables.

It is known that coaxial cables have two coaxial conductors separated from each other by insulation; more precisely, coaxial cables have an inner conductor, a dielectric, a so-called "braid" of copper wires and an outer covering sheath.

The connectors which are installed at the end of the cable must be connected to the copper braid and to the inner conductor; for this purpose the cables are prepared, eliminating a part of the external sheath and exposing the central conductor and the dielectric with the copper braid resting on it.

The rolling back operation is necessary so that the connector, which will later be applied on the end of the cable, can be connected to the copper braid.

The rolled back braid may be placed in contact with the outer sheath or left slightly raised; this difference depends on the necessity imposed by the installation of certain connectors which require the presence of a metal bush, or insulation, between the rolled back braid and the outer sheath of the cable. The copper braid must be completely "rolled back", towards the outer covering sheath, without any metallic wire of the braid remaining in the original position, that is resting on the inner dielectric, to avoid short-circuiting the connector once the latter is installed.

The problem most frequently encountered when preparing cables, as in the operation described, in fact concerns the rolling back of the braid and in particular the possibility that some of its wires may remain in contact with the dielectric, with the possibility of causing a short circuit with the inner conductor; checking the presence or otherwise of a short circuit can be done only on the final product which, if unusable, must be completely discarded, with the resulting costs.

Tools and manual, semiautomatic and automatic machines are known for folding the metallic braid.

US2004/0031144-A1 describes a tool comprising a grip that ends in a part with a circular or elliptical shape to which are internally connected a series of elastically deformable bristles, these constituting a brush in the shape of a circular crown. Inside the brush there remains an opening through which will be inserted the cable from which part of the outer sheath has already been eliminated, exposing the metallic braid to be rolled back.

The brush has an opening, diametrically opposite the grip, through which the cable will be led out after the braid has been rolled back onto the outer sheath by inserting the cable inside the circular brush.

US 6,540,548 describes a device in which the copper wire braid is removed from the central dielectric by means of a rotating brush which also separates the wires from each other.

JP2000166046 describes a device for rolling back the braid which comprises a body formed of a truncated conical portion and a cylindrical portion, which body is mounted rotatably on a fixed cylindrical support. Rotatable body and support are provided internally with rigid bristles to form a brush for rolling back the braid. The stripped end of the cable is axially inserted in the rotating body and then the movement of the internal brush follows the circumference of the cable; to assist in the operation of rolling back, or folding, the braid of the cable, jets of air are also provided in a direction substantially axial to the cable itself.

The known devices have the disadvantage of depending on the cable construction quality; in fact, as the cables are made in a series of extrusions, even slight differences in coaxiality of the inner components cause the incomplete rolling back of all the wires in the braid, resulting in reject percentages of the final product, that is with the connectors already fixed to the ends of the cables, which may be as high as 10% when the cable concerned is, at the start, particularly lacking in coaxiality. This results in high production costs.

The necessity therefore arises for a device for rolling back the metallic braid of a coaxial cable which is able to ensure that all the metallic filaments of the braid are rolled back (with respect to the end of the cable) so as to avoid or drastically reduce the amount of production rejects.

The aim of the present invention is to solve the problems discussed above and to provide a device and a method for folding the braid of a coaxial cable which is simple to realise and to carry out and which is reliable in use in order to eliminate or drastically reduce production rejects. This device must also be usable on automatic systems, to reduce the production costs of the cable with connectors.

This aim is achieved by means of the present invention, which relates to a device for folding a metallic braid of a coaxial cable comprising at least one brush, means for rotating said brush and means for holding said cable still, **characterised in that** said brush is axially aligned with said cable and in that it comprises:
means of support and housing for the end of said cable, said means of support and housing comprising means for housing at least part of said brush; means for moving said brush with respect to said cable; and means for moving said brush around the circumference of said cable to fold said braid of metallic filaments.

According to a preferential aspect of the invention, the device has a single brush.

According to a further aspect of the invention, the supporting element provides a portion for housing the folded cable and is composed of at least two separable parts for the outlet of the treated cable.

According to yet another aspect of the invention, on the cable supporting element there are means for supporting the folded braid in case it is desired that the braid should not be completely rolled back by the brush and brought into contact with the outer sheath.

The above device is generally part of an automatic machine which comprises various stations, for example for stripping the cable, fixing a bush onto the braid, rolling back the braid, removing part of the central dielectric, fixing the connector, etc. Another aim of the invention is therefore a machine for fixing connectors to coaxial cables, which comprises a device according to the present invention.

A further aim of the invention is a procedure for folding the metallic braid of a coaxial cable by means of at least one rotatable brush, **characterised in that** it holds said cable still, supports the end of said cable, folds the filaments of the metallic braid by rotating said brush or brushes around its own axis and bringing them in contact with said cable, and moves said brush or brushes along the circumference of said cable to fold the braid.

In other words, the procedure according to the invention contemplates holding the cable still, folding the braid with at least one rotating brush and turning the at least one rotating brush around the cable to shift the braid and fold it. If two or more brushes are present, one turn or even less than one turn is made around the cable; if there is only one brush, as is preferable for simplicity of construction, the brush makes more than one turn.

Preferably there is one brush and it makes more than one turn around said cable, generally between 1.2 and 1.8 turns, and more preferably it makes 1.5 turns around the cable so as to ensure a complete rolling back of all the wires that form the braid.

According to one aspect of the invention, the braid is brought by the brush into contact with a support element which is mounted on the cable support element so as to then be available in raised condition with respect to the outer sheath of the cable itself.

The device and the procedure according to the invention have numerous advantages with respect to the prior art.

The device is in fact fully automatic and, with the same type of cable and the same processing time of the single end of the cable, it guarantees a drastic reduction of rejects, that is of cables that are unusable because shortcircuited owing to the metallic braid not having been completely rolled back. The reduction of rejects is surprising: in the case of low quality cables, that is of cables with dimensions that are not constant along the whole length and which give reject percentages of 10-13% with known automatic machines, the present invention allows a reduction of rejects to less than 1%. In a test carried out on over 1000 cables of medium quality, the reject percentage was zero.

Moreover, the processing times are very short, less than 4 seconds to obtain complete folding.

These and other advantages will be clear from the following description and from the drawings enclosed purely for illustrative purposes without limitation, wherein:
- Fig. 1 is a partial view of the device according to the invention in open condition;
- Fig. 2a and Fig. 2b are partial side views of the device in Fig. 1, respectively in open and closed position;
- Fig. 3 is a front view of the device in the above figures in closed condition;
- Fig. 4 is a partial side view of Fig. 3;
- Fig. 5 is a partial side view of a variation of the embodiment in Fig. 1;
- Fig. 6 is an enlarged view of the supporting element in Fig. 2a and 2b; and
- Fig. 7-7b are side views, partially in section, of the end of a coaxial cable before and after folding of the braid.

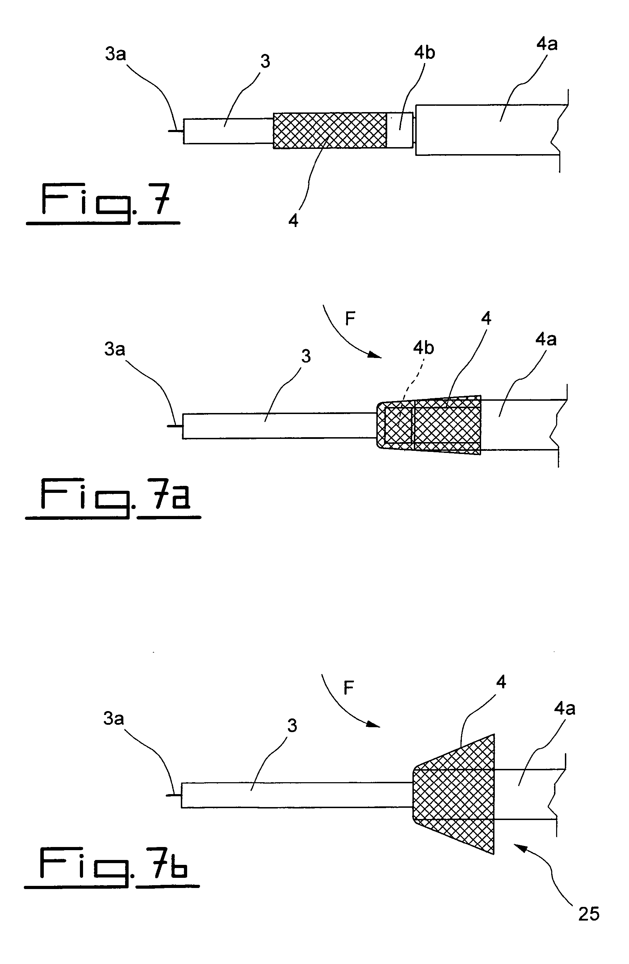

With reference initially to Fig. 7, the device of the invention is intended for folding, that is for rolling back, the metallic braid 4 of a coaxial cable 2, this means that the device of the present invention performs one of the phases of a more general procedure of fixing a connector to the end of a coaxial cable, which procedure is carried out for example by an automatic machine which comprises various stations and corresponding devices for stripping, rolling back the braid, removing part of the dielectric, fixing the connector, etc.

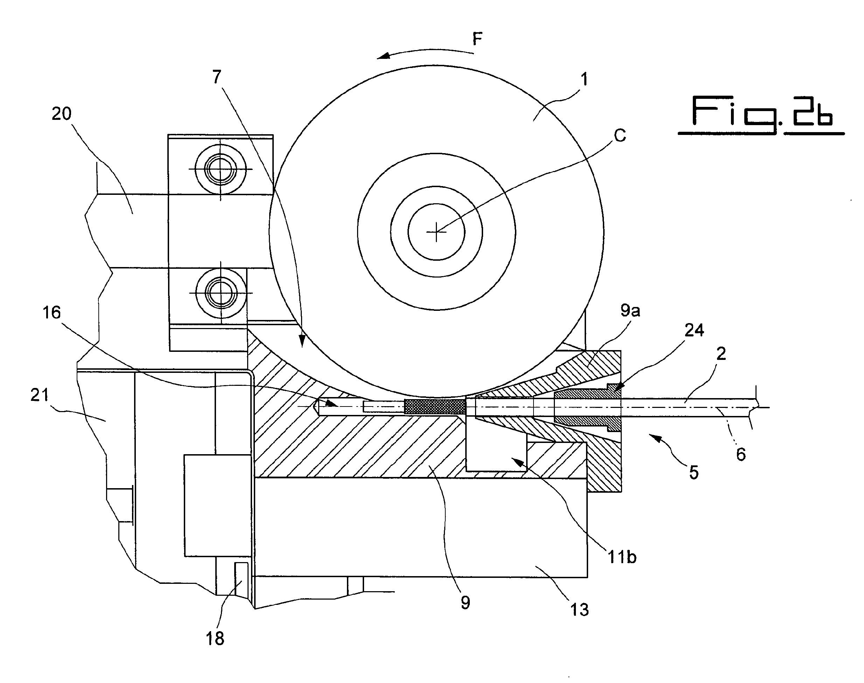

As may be seen in Fig. 7, the cable 2 comprises in a known way a central conductor 3a, a dielectric body 3 situated around the central conductor 3a, a so-called "braid" 4, composed of braided metallic wires, generally copper, and an external sheath 4a. The cable shown is stripped at the end portion, that is the end part of the sheath has been removed, and in this embodiment a metal clamp 4b is shown, fixed to the part of the braid 4 adjacent to the sheath 4a. The clamp 4b may not be present or be fixed onto the sheath, adjacent to the braid, or instead it may be present also in the form of a bush (Fig. 2b). The device of the invention bends the filaments of the braid 4 backwards, towards the sheath 4a and onto the clamp 4b, if present.

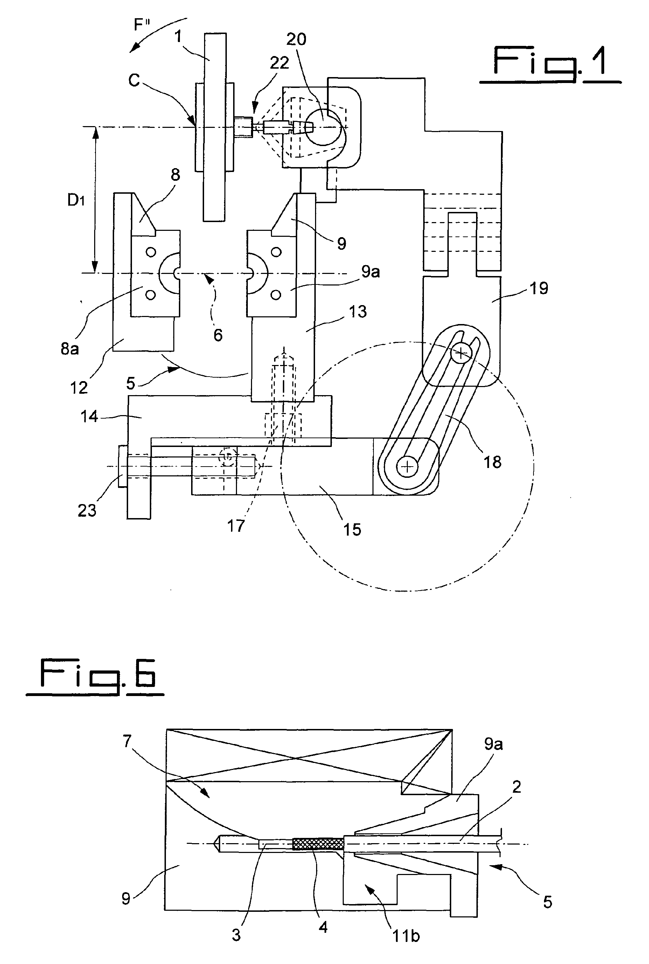

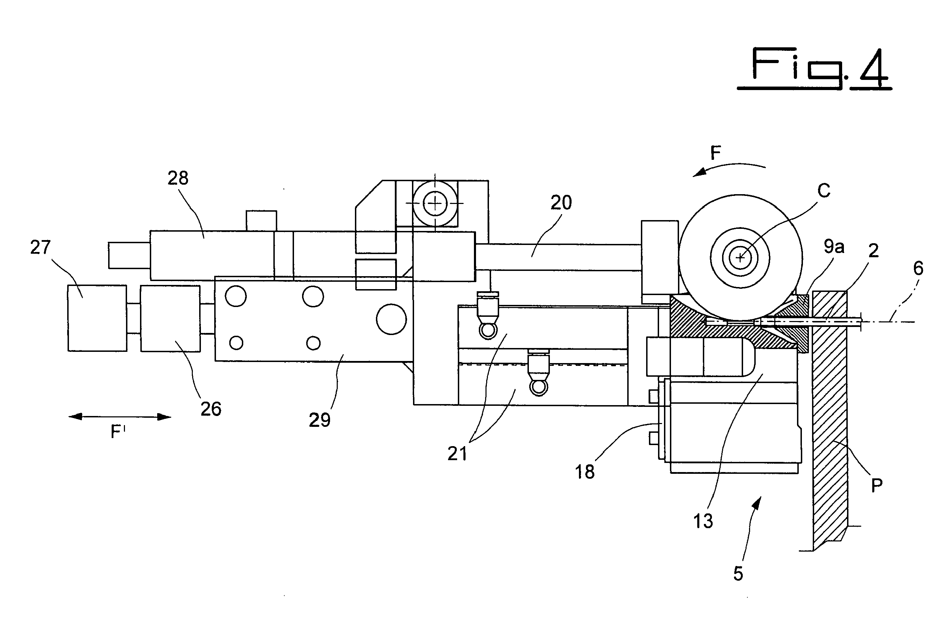

With reference to Figures 1 and 2a-5, the device of the invention comprises at least one brush 1 mounted on means 26 (Fig. 4) which allow it to move, with other components, around the end of a cable 2, from which a part of the outer sheath has previously been removed along the entire circumference of the cable 2. The cable 2 is fixed and is anchored to retaining means P (Fig. 4) as for example a clamp or pliers, in order to prevent its rotation and movement; to prevent bending, the device comprises a housing and support element 5 for the end of the cable 2. The support 5 comprises a flange 10 on which rests the end of the cable 2 and housing means 7 for at least part of the brush 1 to allow said brush to come in contact with the braid and fold it back, towards the sheath 4a.

As mentioned above, the bush is substantially aligned with the axis 6 of the cable, that is the axis of rotation C of the brush 1 is substantially perpendicular (on different planes) to the axis 6 of the cable 2, and the brush rotates in the direction of the arrow F and, when in contact with the braid, it causes it to be folded in the direction of the arrow F towards the sheath 4a. The device also comprises means 18-19 for moving the brush 1 with respect to the support means 5 housing the cable 2 and means 26 for rotating the whole device comprising the brush 1 and the support 5 around the cable 2, which is fixed, so as to shift said brush along the circumference of the cable, in a revolving movement, to fold the braid 4 of metallic filaments.

There are also means 27, preferably a pneumatic actuator, for moving the whole group from and to the cable 2 and the pliers P which, as said above, are fixed.

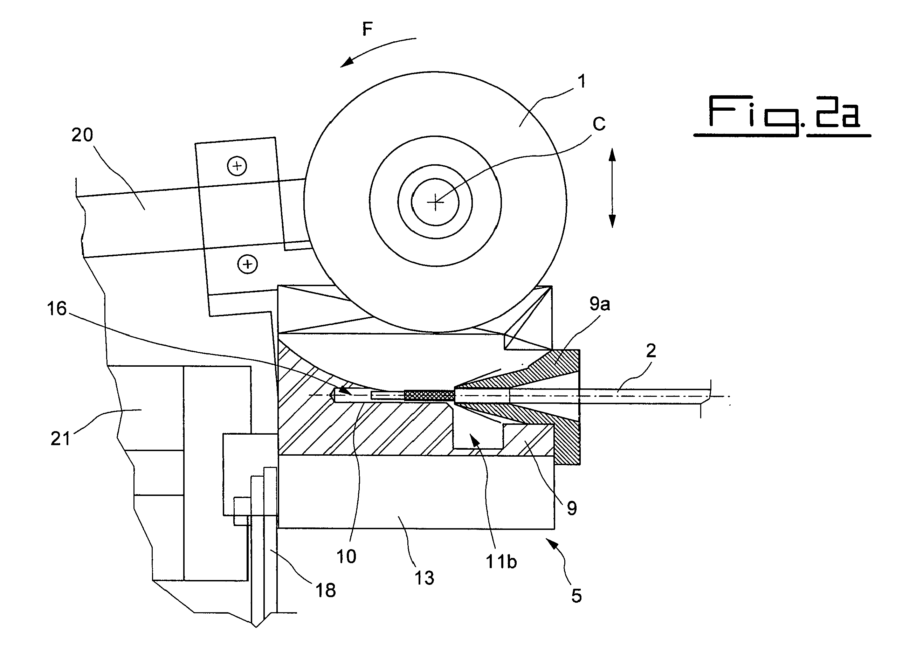

The support and housing means 5 are interchangeable according to the dimensions of the cable to be processed and the type of processing that is to be carried out. As may be seen in Fig. 1 and 2a-2b, in the preferential embodiment of the invention the support 5 is formed by two half-parts 8 and 9 positioned symmetrically with respect to the axis of the cable 2; the semi-elements 8 and 9 have the function of supporting the cable 2, which is blocked by pliers to prevent its rotation, through the flange 10 (Fig. 2a) which supports the stripped part of the cable, comprising the dielectric 3 and the copper braid 4 resting on it.

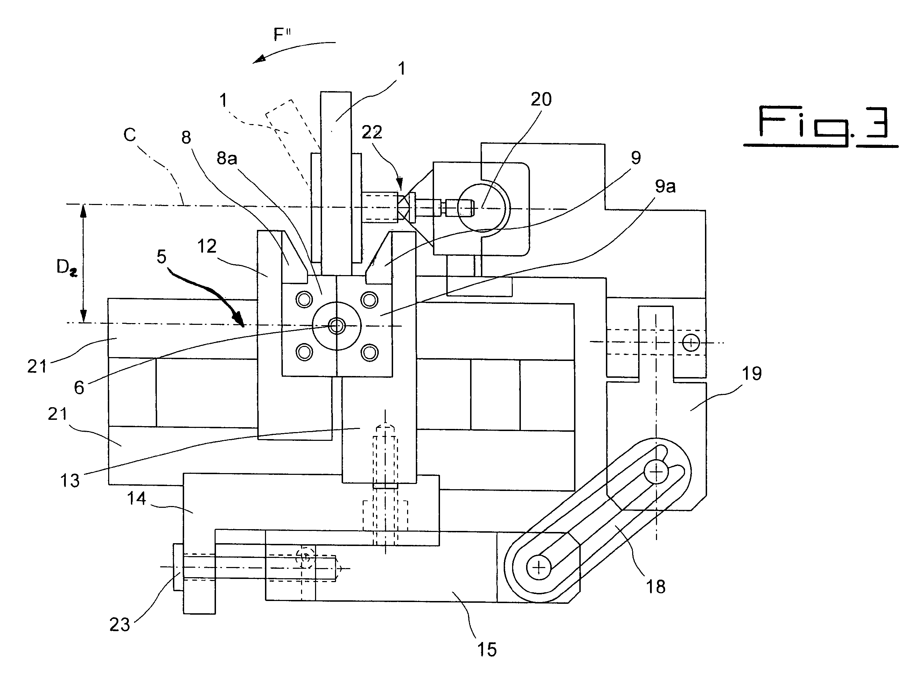

As may be seen in the figures, the housing and support element 5 comprises a housing 7 for a part of the brush 1, this housing having dimensions such as to allow the rotating brush 1 to come in contact with the metallic braid 3, folding it onto the cable. Each of the parts 8 and 9 of the support 5 is also provided with a housing space 16 for the cable 2, a housing space 11b and 11a located adjacent to the cable support flange 10, through which passes the braid which, under the effect of the rotation of the brush 1 in contact with the cable, is folded towards the outer sheath 4a of the cable 2. As shown in Fig. 1 and Fig 3 the parts 8 and 9 of the support element 5 are mounted on corresponding clamps 13 and 12, so that they can be removed and replaced according to the desired processing. The clamps 13, 12 can be tightened by means of an actuator, generally pneumatic, indicated with 21 in Fig. 4; the right clamp 13 also has restraining means 17 with a gauge block 14 which is part of the linkage for moving the brush with respect to the cable, that is of the means which move the brush towards and away from the support 5 and the cable 2 during the procedure of the present invention. More particularly, the leverage comprises the gauge block 14, on which is mounted in a sliding fashion a regulating block 15 at the end of which are mounted a connecting rod 18 and an arm 19. The arm 19 is connected with a group comprising a motor 28, preferably a pneumatic motor, and an axle 20 for rotating the brush 1.

Fig. 1 shows the configuration of the device before starting work with the device in 'open' configuration: the two clamps 13 and 12 and the two supporting half-elements 8 and 9 are separated and distanced, and the brush 1 is distanced from the supporting half-elements 8 and 9. The cable 2 is gripped in 'pliers' or equivalent retaining means P (Fig. 4) and is therefore fixed, while the group holding the brush 1 and the supporting element 5 moves in a known way, for example with a cylinder or other pneumatic actuator 27, from and to the pliers P as shown by the arrow F'; the same group is also able to rotate around the circumference of the cable 2, as shown by the arrow F" in Fig. 1, thanks to suitable means, for example an electric motor indicated schematically with 26 in Fig. 4.

More particularly the motor 26 rotates a supporting element 29 on which are directly or indirectly mounted all the other components of the folding group according to the invention, in this way causing the brush 1 to turn around the circumference of the cable 2, at the distance fixed by the leverage 14,15,18 and 19, as indicated by the arrow F" and by the hatched line indicating the brush 1 in Fig. 3.

The actuator 21 closes the clamps 12 and 13, bringing the machine into closed configuration, Fig. 3, and also moves to the side the leverage 19, 18 to move the brush, allowing it to approach and partly pass through the housing 7,creating a contact between the braid to be processed and the deformable metal elements (that is the bristles) of the brush 5. The leverage 18, 19 in Figure 3 allows the transformation of the open-closed movement imposed on the clamps 12 and 13, in a horizontal direction, into an up-down movement of the brush 1, in a vertical direction.

Passing through the housing 7, the brush 1 is rotated by a special device 28, for example a pneumatic or electric motor, which acts on the axle 20 and transmits the movement to the brush in a known way, for example with a coupling 22 (Fig. 3).

In order to fold the braid onto the sheath, the closed clamps and the brush must make at least one complete turn, following the arrow F", around the circumference of the cable 2, which remains resting on the support flange 10 and anchored to the pliers P, so as to prevent the rotation of the cable itself.

The cable thus prepared does not move during the processing phases, avoiding the only partial rolling back of the braid.

The quality of processing depends appreciably on the intensity of the contact between the bristles of the brush 1 and the braid 4, in fact if the brush were too close to the cable the drag of the deformable elements of the brush would be excessive, with the risk of breaking the braid; instead, if the brush were too far away, the action of the deformable elements would not be very effective and the braid, or part of it, would not be rolled back.

To overcome these problems the machine is equipped with a device for regulating the distance D₂ (Fig. 3) which goes from the axis of the cylindrical body C of the brush 1 to the axis of the cable to be processed 6, in closed condition of the device; for this purpose a regulating screw 23 is provided which acts on the regulating block 15, which holds the connecting rod 18, and on the gauge block 14. The distance D₂ from the axis of the cylindrical body C of the brush 1 to the axis of the cable to be processed 6 is given by the fixed stroke that the leverage transmits to the brush converting the open-close movement of the pliers and by the initial distance D₁ (Fig. 1), with open clamps, measured from the axis of the cylindrical body C of the brush 1 to the axis of the cable to be processed 6. Modifying said initial distance D₁ will also modify the final distance D₂ between the axis of the cylindrical body C of the brush 1 and the axis of the cable 6, with closed clamps, since the stroke imposed by the leverage is constant.

When processing begins and the brush 1 and the clamps 13, 12 are approached and blocked by the pneumatic actuator, the machine will go into closed configuration (Fig. 3), the brush 1 will go into position at the distance D₂ from the axis of the cable corresponding to the one set previously.

As mentioned above, the device according to the present invention contemplates the presence of a housing 11a or 11b adjacent to the flange 10, in which the folded braid is contained, so as not to hinder the turning of the brush around the cable 2.

The housing 11a, 11b, consists substantially of a lowering of the portion that houses the cable, obtained adjacent to the flange 10, while the shape of the housing depends on the method of folding the braid. The rolled back braid may in fact be brought into contact with the outer sheath 4a, as shown schematically in Fig. 7a, or left slightly raised, that is at an angle to the sheath 4a, as shown in Fig. 7b; the method of folding the braid depends on the type of connector that is to be fixed to the cable and which in some cases requires the presence of a bush 24 (Fig. 2b) between the folded braid 4 and the outer sheath 4a of the cable 2. So, depending on the presence or otherwise of a bush, the dimensions of the housing will be larger or smaller.

The Figures 1, 2a, 2b, 3, 4 and 6 show an embodiment which allows the partial rolling back of the braid 4 of coaxial cables, leaving a space 25 (Fig. 7b) between the outer sheath 4a and the folded braid 4, which space is suited to hold a bush 24 required for the installation of the connector, shown in Fig. 2b. To obtain the desired angle, that is the space 25, between the folded braid and the cable 2, the device contemplates the presence of two semi-cones 8a and 9a mounted on the parts 8 and 9, respectively, of the support and housing element 5 of the cable 2; for the sake of simplicity and greater clearness, the Figures 2a, 2b, 4 show part 9 with the semi-cone 9a hatched in a different way, even though the sections of these parts are not shown in the figure.

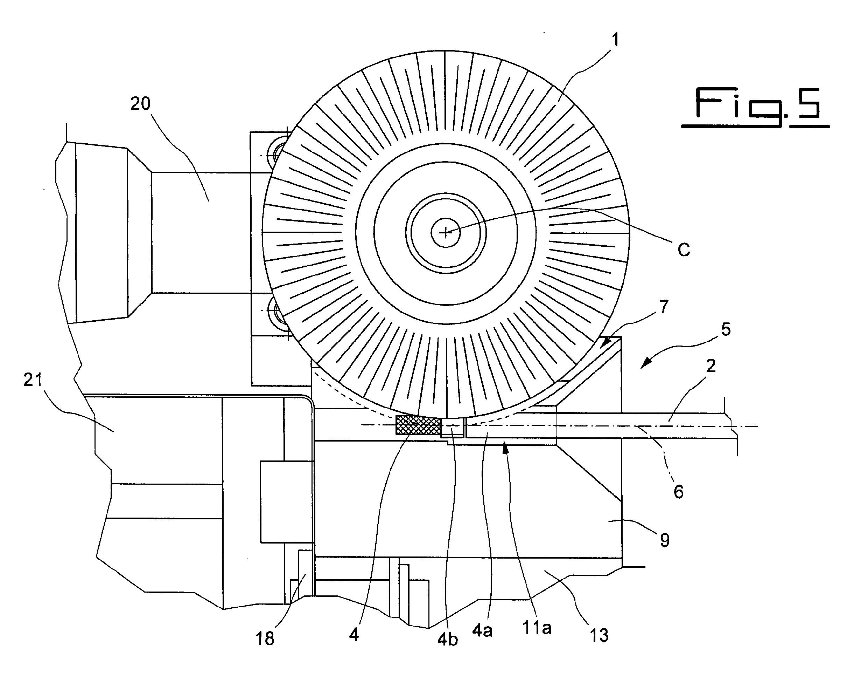

As may be seen better in Figure 6, in this configuration, the space 11b present next to the flange 10 is sufficiently large to house the semi-cone 9a. The presence of the semi-cone 9a means that the braid pushed by the brush 1 goes to rest on the outer surface of the semi-cone 9a, thus assuming an angled position with respect to the outer sheath 4a of the cable 2. Fig. 5 shows the embodiment of the invention in which the braid 4 is completely rolled back over a metal band 4b and over the sheath 4a, in contact with them. For this reason the semi-cones 9a and 8a are not contemplated and so the housing 11a for the rolled down braid has smaller dimensions than the housing 11b shown in the figures discussed previously.

In both the embodiments shown, the operation is substantially the same, that is the device is brought towards the cable 2, the actuator 21 is activated and the clamps 12 and 13 are closed to provide a single supporting element 5, formed by the two half-elements 8 and 9, at the end of the cable 2. At the same time the brush 1 is lowered and rotated in a known way, for example by a pneumatic motor (not shown), to fold the braid 4 away from the end of the cable and the whole group is turned around the cable 2, which remains fixed, making at least one turn along the whole circumference of the cable itself to fold all the filaments of the braid; during this revolution around the cable, the folded braid is housed in the housing 11a or 11b, depending on the type of processing requested.

The speed of rotation and the number of turns made around the cable 2 by the group composed of the clamp and brush are adjustable, allowing for the thickness of the braid to be rolled back and for the time to be spent on processing the cable.

When the predetermined number of turns has been made, the group composed of the clamps 12 and 13, the supporting half-elements 8 and 9 and the brush 1 is 'opened' by the actuator 21, allowing the separation of the two clamps 12 and 13 and the partial moving of the brush 1 back into starting position, returning to the configuration in Fig. 1.

These contrivances allow the operations of removing the processed cable, with the braid resting on the outer sheath, without any accidentally contacts with the machine, and in particular with the deformable elements of the brush, which could lift the folded braid, compromising the result and the quality of the processing.

## Claims

1. Device for folding a metallic braid (4) of a coaxial cable (2), comprising at least one brush (1), means for rotating said brush and means (P) for holding said cable still, **characterised in that** said brush is axially aligned with said cable and **in that** it comprises:
means of support and housing (5) for the end of said cable (2), said means of support and housing (5) comprising means for housing (7) at least part of said brush; means (18,19; 27) for moving said brush with respect to said cable; and means (26) for moving said brush around the circumference of said cable to fold said braid (4) of metallic filaments.

2. Device according to claim 1, wherein there is only one brush (1) and said means (26) for moving the brush cause it to make at least one turn around said circumference of the coaxial cable (2).

3. Device according to claim 2, wherein said means (26) for moving the brush (1) cause said brush to make more than one turn around said circumference of the coaxial cable (2).

4. Device according to one of the preceding claims, wherein said means of support (5) comprise at least two separable parts (8,9) for the outlet of the treated cable (2).

5. Device according to one of the preceding claims, wherein said means of support (5) provide a portion (11a, 11b) for housing the folded braid (4).

6. Device according to claim 5, comprising also means of support (8a, 9a) for the braid during the folding phase, said means being mounted on the aforementioned means of support (5) for the cable (2).

7. Device according to one of the preceding claims, comprising also means (14,15,18,19 and 23) for regulating the distance between the axis (C) of the brush (1) and the surface of said cable (2).

8. Machine for fitting connectors on coaxial cables **characterised in that** it comprises a device according to one of the preceding claims.

9. Procedure for folding the metallic braid (4) of a coaxial cable (2) by means of at least one rotatable brush (1), **characterised in that** it holds said cable still, supports the end of said cable, folds the filaments of the metallic braid by rotating said brush or brushes around its own axis and bringing them in contact with said cable, and moves said brush or brushes along the circumference of said cable to fold the braid.

10. Procedure according to claim 9, wherein there is one brush which makes at least one turn around said cable.

11. Procedure according to claim 10, wherein there is one brush which makes more than one turn around said cable.

12. Procedure according to one of the claims 9, 10 or 11, wherein said braid (4) is brought by the brush (1) into contact with a supporting element (8a, 9a).
